# EUROPEAN PATENT APPLICATION

(11) **EP 3 309 522 A1**
(43) Date of publication of application: **18.04.2018**
(21) Application number: 16193199.3
(22) Date of filing: 11.10.2016
(51) Int. Cl.: G01F 1/56, G01N 27/07

(54) **HEAT EXCHANGER**

(71) Applicant: HS Marston Aerospace Limited, Wolverhampton WV10 6QJ (GB)
(72) Inventor: Phillips, Paul, Wolverhampton, Staffordshire WV10 6QJ (GB)
(74) Representative: Taylor, Adam David

(57) **Abstract**

A heat exchanger system comprises a heat exchanger 100; and one or more sensor(s) 90 for measuring characteristics of a fluid flow field across a cross-section of a flow path in the heat exchanger 100. Each of the one or more sensor(s) 90 comprises multiple conductivity sensing elements 110 distributed across multiple locations in an array extending over the cross-section of the flow path for obtaining measurements of the fluid flow field at the multiple locations.

## Description

The invention relates to a heat exchanger system including a sensor for measuring a fluid flow field within a flow path of the heat exchanger. The invention also relates to a method of manufacture of the heat exchanger and to a method of analysing a fluid flow field within a flow path of a heat exchanger.

Heat exchangers are used in a variety of fields for exchange of heat between two or more fluids, with the fluids passing through two or more fluid flow paths. Various types of heat exchangers are known, and the common features for heat exchangers generally include an inlet and an outlet for each fluid flow path, a heat exchanger core where the bulk of the heat transfer takes place and some kind of manifold or flow conditioning arrangement for directing the flow of fluid from each inlet through the core, and from the core to the each outlet. It is useful to be able to determine the characteristics of one or more of the fluid flow field(s) in the heat exchanger, such as in the core, for example in relation to the distribution of the speed of flow across the core, the temperatures of the fluid and distribution of temperatures in the core or at inlet/outlet and so on. Suitable methods for doing this are not widespread. At best, it is known to do assess the fluid flow fields in heat exchangers by measuring fluid parameters at one or more points using sensors such as thermocouples and flowmeters, and to then estimate other characteristics of the fluid flow fields using models and/or empirical data. Increases in the effectiveness of measurements of the fluid flow field would provide advantages in relation to the effectiveness of designing, operating and/or maintaining heat exchangers.

Viewed from a first aspect, the invention provides a heat exchanger system comprising: a heat exchanger; and a sensor for measuring characteristics of a fluid flow field across a cross-section of a flow path in the heat exchanger; wherein the sensor comprises multiple conductivity sensing elements distributed across multiple locations in an array extending over the cross-section of the flow path for obtaining measurements of the fluid flow field at the multiple locations.

With this heat exchanger the conductivity sensing elements of the sensor can provide a mapping of characteristics of the fluid flow field across the cross-section via the conductivity measurements made with the arrange of sensing elements. It will be understood that the reference to conductivity measurements is equivalently a reference to measurements of resistance at the same points. The sensing elements may be configured for mapping characteristics of the fluid flow field across the cross-section. Based on the measurements from the sensing elements it is possible to derive information about the fluid flow field such as density, temperature, flow speed, fluid phase/phase mixture or gas fractions and so on. This can give a mapping of the fluid flow field for such information, which can then be used to derive further information about operation of the heat exchanger such as monitoring heat transfer, identifying when there is maldistribution of fluid flow, identifying possible degradation of the heat exchanger and so on. The sensor can provide both real-time monitoring of the fluid flow field and health/condition monitoring data for the heat exchanger system and optionally for a broader thermal management system. The measurements from the sensor can also be used in relation to modelling of the heat exchanger, for example to improve the accuracy of a model or confirm the effectiveness of the model, as well as for development of improved heat exchanger systems, for example by identifying a requirement for changes in geometry or for optimising flow rates.

The sensor may be positioned at a cross-section of a flow path at an inlet and/or an outlet of the heat exchanger, within a manifold or flow distributor such as a tank, at an entrance and/or an exit from a heat exchanger core of the heat exchanger, part-way through a heat exchanger core of the heat exchanger and/or at any other required location. Multiple sensors at different positions may be used in order to allow for measurement of the fluid flow field across multiple cross-sections in order to allow for further information to be derived about operation of the heat exchanger, for example multiple cross-sections of the same fluid flow path can be used to determine differences in the fluid flow field at various positions within the heat exchanger, such as temperature and/or flow rate changes. In some examples there is a sensor at the heat exchanger core for measuring the distribution of fluid density, flow rate and/or temperature in a fluid flow field at the core. This sensor may be at an entrance or exit from the core, or within the core. There may be two or more such sensors in two or more of these locations at the core. The heat exchanger may have a modular core to permit a sensor to be positioned within the core, i.e. where the fluid flow path is part-way through the core.

The sensor comprises multiple conductivity sensing elements and these may comprise electrode pairs with a space in between the electrodes, wherein the fluid in the fluid flow path can fill the space when the heat exchanger is in use. The conductivity of the fluid between the electrode pairs can be measured using a suitable electrical circuit connected to the electrodes. An electrode pair may be provided by a pair of wires that cross over each other with a space between the wires. The required multiple electrode pairs may hence be provided by two spaced apart layers of wires, wherein each layer comprises a row of wires with the wires being arranged so that wires in a first of the two layers cross over the wires in a second of the two layers, for example forming a grid type pattern. The multiple intersections of the wires in the two layers hence form the multiple sensing elements. In each layer the row of wires may comprise parallel straight wires, preferably with equal spacing between each wire. The layers may be arranged with the wires crossing over one another with at least a 45 degree angle, preferably an angle that is about perpendicular, such as a square grid of wires. Using a grid of this nature allows multiple evenly spaced conductivity sensing elements to be formed in an efficient manner. One layer may act to provide current emitter electrodes whilst the other layer provides current receiver electrodes.

The layers may be spaced apart by a distance determined based on the properties of the fluid that is to be measured and/or based on the required resolution of the sensor, i.e. the spacing between the sensing elements. The distance between the layers may typically be sufficient for a measureable difference in conductivity dependent on the properties of the fluid and the expected difference for different locations in the fluid flow field. The distance between the layers may typically be smaller than the spacing between the sensing elements, for example it may be less than a half of the spacing or less than a quarter of the spacing between sensing elements. In some examples the distance between the layers is 5mm or below, and the distance between the layers may be 3mm or below, for example about 2mm or less.

The resolution of the sensor is set based on the spacing between the sensing elements. Narrow gauge wires can be used to allow for small spatial resolutions. For example the wires may have a diameter of 0.1 to 1 mm, or a wire gauge of 38 to 18. The wire diameter may be selected to be significantly lower than the required resolution, for example 25% or less than the spacing between sensor elements or 15% or less than that spacing.

The resolution may be advantageously be as low as 1 mm, for example in the range 1 mm to 10mm. The wires in the rows in each layer may have about 1 mm spacing or about 2mm spacing. Larger spatial resolutions may also be used depending on the level of detail required. The wire gauge may be set in relation to the spatial resolution in order to avoid any adverse impact on the fluid flow due to obstruction by the wires, whilst also allowing for the largest wire gauge to be used to minimise the resistance in the wires and hence allow for a more direct measure of the conductivity at the intersection of the wires.

The heat exchanger system may include a data processing device for recording and/or analysing the measurements from the sensor. The data processing device may include a data transmission circuit for transmission of data from the sensor to other parts of the data processing device and/or to an external data processing system. The data transmission circuit may be for wireless transmission of data from the heat exchanger to parts of the data processing device spaced apart from the heat exchanger. In this way the packaging, location and orientation of the heat exchanger can be optimised without restrictions arising from a requirement for a wired data connection. The data processing device may include circuitry embedded in the heat exchanger, for example held in a housing of the heat exchanger. This circuitry may include the data transmission circuit. The circuitry may be housed in cavities in a housing of the heat exchanger. One or more parts of the circuitry may be formed integrally within the housing, such as conductive pathways connecting to the sensor. The heat exchanger system may include a power supply for the sensor and/or the data processing apparatus. A wired connection may be used for the power supply. In that case the wired power connection may also be used for transmission of data.

The data processing device may be configured to analyse the measurements from the sensor in order to determine information concerning the fluid flow field, for example information concerned with fluid density, flow speed, flow pattern, temperature and so on. The data processing device may be arranged to map a distribution of one or more of these types of information, such as a two dimensional mapping over the area of the sensor. The data processing device may store the results of such analysis or transmit them to an external data processing system. In some examples the data processing device may record data from the sensor over a period of time and make a comparison between multiple sets of data obtained at different times in order to identify changes occurring over time. This can allow for the data processing device to identify changes in performance of the heat exchanger, for example to identify potential degradation and/or a need for maintenance. It can also allow for tracking of the performance of the heat exchanger as it is exposed to differing operating conditions.

The heat exchanger may be formed by additive manufacturing. The sensor and/or the associated electrical circuit(s) (such as the data transmission circuit) may also include one or more parts formed by additive manufacturing. Advantageously the heat exchanger may be manufactured simultaneously with parts of the sensor and/or circuit(s) using additive manufacturing. The additive manufactured heat exchanger may be formed with cavities for receiving parts of the sensor circuitry that cannot readily be formed by additive manufacturing.

The heat exchanger will usually be arranged to receive a liquid as the fluid to be measured. Measuring conductivity is more effective with a liquid. The fluid to be measured may be entirely liquid, or it may be a two phase fluid with a mixture of gas as well as liquid. The fluid to be measured may be a single liquid, or it may include a mixture of liquids. The sensor may be used to measure the distribution of the constituents of a mixture of fluids. The heat exchanger will generally exchange heat between two fluids and in this case at least one of the fluids may include a liquid. Each fluid has its own fluid flow path in the heat exchanger and may be one or more sensors for measuring characteristics of a fluid flow field across a cross-section of each of the flow paths.

The fluid(s) may for example include water, oil, coolant, fuel, exhaust gases and so on.

The heat exchanger may be an aerospace heat exchanger for use on an aircraft. The arrangement of the sensor is resistant to vibrations and extremes of temperature and/or pressure. It can therefore operate in environments such as on-board an aircraft with a high degree of durability. In one example the heat exchanger is for heating of the aircraft fuel, for example during cold weather, and the sensor can be used to measure the efficacy of this heat exchange to ensure safe and efficient operation of the aircraft engine.

Viewed from a second aspect, the invention provides a method of manufacturing a heat exchanger system comprising: installing a sensor within a heat exchanger, the sensor being for measuring characteristics of a fluid flow field across a cross-section of a flow path in the heat exchanger; wherein the sensor comprises multiple conductivity sensing elements distributed across multiple locations in an array extending over the cross-section of the flow path for obtaining measurements of the fluid flow field at the multiple locations.

The method may include forming the heat exchanger with any or all of the features as discussed above in connection with the first aspect. The method can thus include installing multiple sensors at various locations. The sensor(s) may be formed using wires as discussed above. The step of installing the sensor may include forming the sensor in situ, for example by installing layers of wires. The method may include the use of additive manufacturing for one or more parts of the heat exchanger and/or the sensor, and in one example the method includes forming at least a portion of the heat exchanger by additive manufacturing and forming the sensing elements using the same additive manufacturing process. In this way the sensor can be formed integrally with the heat exchanger. The additive manufacturing process may use a single material or it may be a multi-material additive manufacturing process.

The method can include retrofitting an existing heat exchanger with a sensor as described herein.

Viewed from a third aspect, the invention provides a method of analysing characteristics of a fluid flow field across a cross-section of a flow path in a heat exchanger; the method comprising: using a sensor comprising multiple conductivity sensing elements distributed across multiple locations in an array extending over the cross-section of the flow path for obtaining measurements of the fluid flow field at the multiple locations.

This method may include the use of a heat exchanger with a sensor as discussed above in connection with the first aspect. The method may include using the sensor to make measurements as discussed above and optionally to analyse those measurements.

The method may include deriving information about the fluid flow field such as density, temperature, flow speed, fluid phase/phase mixture or gas fractions and so on. A product of the method may be a mapping of the fluid flow field in relation to such information, which can then be used to derive further information about operation of the heat exchanger such as monitoring heat transfer, identifying when there is maldistribution of fluid flow, identifying possible degradation of the heat exchanger and so on. The method can include real-time monitoring of the fluid flow field and/or gathering of health/condition monitoring data for the heat exchanger system. The method can include using the measurements in a broader thermal management system, for example a thermal management system for an aircraft. The measurements from the sensor can also be used in relation to modelling of the heat exchanger, for example to improve the accuracy of a model or confirm the effectiveness of the model, as well as for development of improved heat exchanger systems, for example by identifying a requirement for changes in geometry or for optimising flow rates.

The heat exchanger system may include a data processing device as discussed above and the method may include the use of the data processing device for recording and/or analysing the measurements from the sensor.

The heat exchanger may be an aerospace heat exchanger for use on an aircraft and the method may hence be a method of analysing characteristics of a fluid flow field in an aircraft heat exchanger. For example, the method can include using the sensor to measure the efficacy of heat exchange in an aircraft to ensure safe and efficient operation of the aircraft engine, such as by monitoring heat exchange in a fuel heating system.

A preferred embodiment of the invention will now be described by way of example only and with reference to the accompanying drawings in which:
Figure 1 shows an example cross-flow heat exchanger;
Figure 2 is a cross-section through a heat exchanger showing flow distribution at the heat exchanger core; and
Figure 3 shows a sensor or obtaining measurements of a fluid flow field in the heat exchanger.

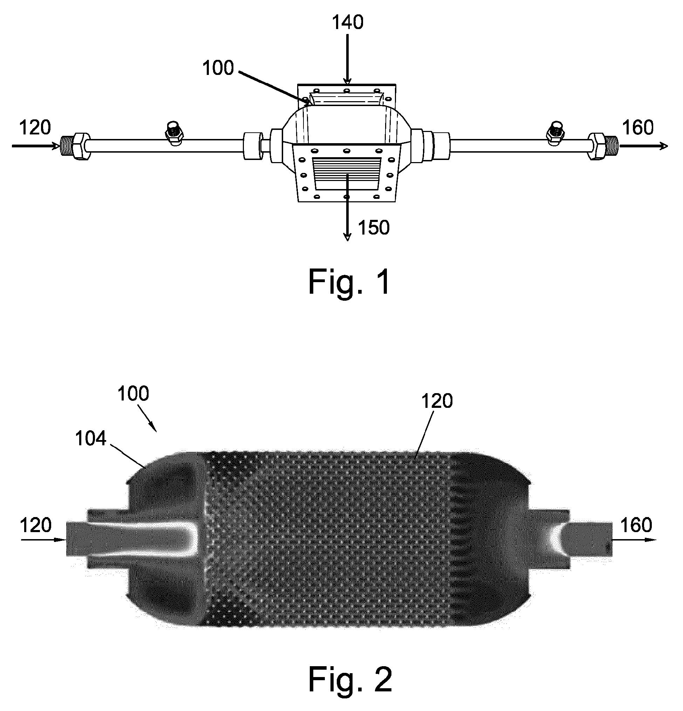

An example heat exchanger 100 is shown in Figure 1. The heat exchanger 100 is formed by an additive layer manufacturing technique. It receives heated liquid 120 and is arranged to exchange heat between the heated liquid 120 and a cool fluid 140 that enters the heat exchanger 100 from a perpendicular direction to the heated fluid 120. The cool fluid 140 exits the heat exchanger 100 in the direction 150, having absorbed heat from the heated liquid 120. The heated liquid 120 leaves the heat exchanger 100 in the direction 160 having transferred heat to the cool fluid 140.

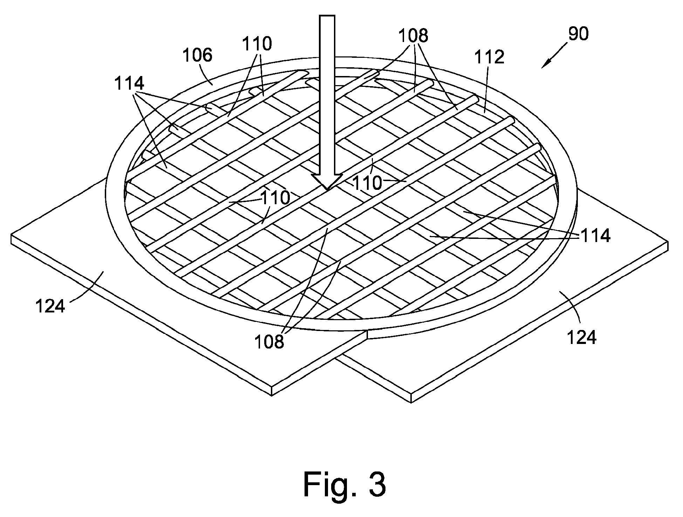

Figure 2 shows the distribution of liquid fluid flow through the heat exchanger 100 of Figure 1. The heated fluid 120 enters the heat exchanger 100 into a distributor tank 104, where the flow spreads and disperses across the heat exchanger core 102. After flowing through the heat exchanger core 102 the cooled liquid exits via a collector tank and flows out via an outlet in the direction 160. It can be useful to monitor the flow distribution in order to provide both real-time monitoring of the fluid flow field and health/condition monitoring data for the heat exchanger system and optionally for a broader thermal management system. In order to measure the fluid flow field the heat exchanger 100 can be provided with a sensor 90 as shown in Figure 3.

This sensor 90 can be positioned at any cross-section of the fluid flow path trhough the heat exchanger 100, for example at an inlet and/or an outlet of the heat exchanger, within a manifold or flow distributor such as the distributor tank 104, at an entrance and/or an exit from the heat exchanger core 102, part-way through the heat exchanger core 102 and so on. Multiple sensors 90 at different positions can be present in order to allow for measurement of the fluid flow field across multiple cross-sections, and hence enable further information to be derived about operation of the heat exchanger 100. The heat exchanger 100 may have a modular core 102 to permit a sensor 90 to be positioned within the core 102, i.e. where the fluid flow path measured by the sensor is part-way through the core 102.

The sensor 90 has a layered construction as shown in Figure 3 with a first electrode layer 106 having a first set of parallel wires 108 that cross to form intersections 110 with a second electrode layer 112 having a second set of parallel wires 114. The two layers 106, 112 are spaced apart by a small distance, for example a few mm, and they have electrical connections so that the wires of one layer acts as emitter electrodes while the wires of the other layer act as a receiver electrodes. The intersections 110 of the two sets of wires 108, 114 form multiple electrode pairs that provide multiple conductivity sensing elements 110 spaced apart over the fluid flow field. Each of the layers 106, 112 is provided with a multiplexer circuit 124 for transmitting and receiving voltage pulses through the individual wires as described below. The fluid flowing through the heat exchanger can fill the space between the electrode pairs and by measuring the conductivity of the fluid between the electrode pairs then characteristics of the fluid can be determined, such as density, temperature, flow speed, fluid phase/phase mixture or gas fractions. The two layers 106, 112 of parallel wires 108, 114, form a grid with multiple evenly spaced conductivity sensing elements 110 that can measure the fluid flow field across the whole cross-section of the flow area. The resolution can be relatively high, with spacing between the wires of 2 mm easily achievable, with suitably narrow gauge wire.

One of the two layers 106, 112 of wires 108, 114 serves as a transmitter, while the other layer of wires serves as a receiver. Each wire in the transmitter plane is periodically activated by the appropriate multiplexer circuit 124 by a short voltage pulse. During the activation of individual wires as a transmitter then all other wires are kept at zero potential to avoid a risk of interference in the measurements. The electrical current passed to the receiver wire will be dependent upon the local instantaneous conductivity at each crossing point 110 of the transmitter and receiver wires 108, 114. This electrical current is transformed into a voltage using operational amplifiers and sampled by sample/hold circuits. The signal can be converted from analogue to digital before being recorded by a data processing circuit (not shown) connected to the sensor 90.

The data processing circuit records and analyses the data from the sensor 90 (and from multiple sensors 90 in some examples). The data processing circuit can obtain data at a high sampling rate and store it for later analysis or transmit it elsewhere, as desired. The data from the sensor 90 can be used for various purposes as discussed above.

It will be appreciated that the sensor 90 of Figure 3 could equally well be used with other heat exchangers, obtaining the same advantages. The use of conductivity measurements provides best results when the fluid includes a liquid or mix of liquids as the fluid, or as a part of the fluid (for example in a two phase mixture), and so typically the fluid will be a liquid. The sensor 90 is particularly well-suited to use with aerospace heat exchangers and thus may advantageously be used in that context.

## Claims

1. A heat exchanger system comprising:
a heat exchanger; and
one or more sensor(s) for measuring characteristics of a fluid flow field across a cross-section of a flow path in the heat exchanger;
wherein each of the one or more sensor(s) comprises multiple conductivity sensing elements distributed across multiple locations in an array extending over the cross-section of the flow path for obtaining measurements of the fluid flow field at the multiple locations.

2. A heat exchanger system as claimed in claim 1, including one or more sensor(s) at one or more of a cross-section of a flow path at an inlet and/or an outlet of the heat exchanger, within a manifold or flow distributor such as a tank, at an entrance and/or an exit from a heat exchanger core of the heat exchanger, part-way through a heat exchanger core of the heat exchanger and/or at any other selected location in the heat exchanger.

3. A heat exchanger system as claimed in claim 2, comprising two or more sensors at the heat exchanger core for measuring the distribution of fluid density, flow rate and/or temperature in a fluid flow field of two or more cross-sections at the core, wherein the sensors are located at two or more of an entrance to the core, and an exit from the core, or within the core and part-way through the core.

4. A heat exchanger system as claimed in claim 1, 2 or 3, wherein each of the one or more sensor(s) comprise multiple conductivity sensing elements having electrode pairs with a space in between the electrodes, wherein the fluid in the fluid flow path can fill the space when the heat exchanger is in use; and wherein each electrode pair is provided by a pair of wires that cross over with a space between the wires.

5. A heat exchanger system as claimed in any preceding claim, wherein the multiple electrode pairs are provided by two spaced apart layers of wires, wherein each layer comprises a row of wires with the wires being arranged so that wires in a first of the two layers cross over the wires in a second of the two layers, for example forming a grid type pattern.

6. A heat exchanger system as claimed in claim 5, wherein the multiple intersections of the wires in the two layers form the multiple sensing elements, and wherein each layer the row of wires comprises parallel straight wires.

7. A heat exchanger system as claimed in any preceding claim, wherein:
the distance between the layers is smaller than the spacing between the sensing elements; and
wherein the distance between the layers is 5mm or below, optionally 3mm or below; and/or the spacing between the sensing elements is in the range 1 mm to 10mm.

8. A heat exchanger system as claimed in any preceding claim, including a data processing device for recording and/or analysing the measurements from the sensor, wherein the data processing device includes a data transmission circuit for wireless transmission of data from the sensor to other parts of the data processing device and/or to an external data processing system.

9. A heat exchanger system as claimed in any preceding claim, including a data processing device for recording and/or analysing the measurements from the sensor, wherein the data processing device includes circuitry embedded in the heat exchanger.

10. A heat exchanger system as claimed in any preceding claim, including a data processing device for recording and/or analysing the measurements from the sensor, wherein the data processing device is configured to analyse the measurements from the sensor in order to determine one or more types of information concerning the fluid flow field and to map a distribution of one or more of these types of information, such as a two dimensional mapping over the area of the sensor and/or the data processing device is configured to record data from the sensor over a period of time and make a comparison between multiple sets of data obtained at different times in order to identify changes occurring over time.

11. A heat exchanger system as claimed in any preceding claim, wherein the fluid to be measured is a multi-phase fluid including a gas as well as liquid and/or a mixture of liquids, and wherein the sensor is used to measure the distribution of the constituents of the multi-phase fluid.

12. A heat exchanger system as claimed in any preceding claim, wherein the heat exchanger is an aerospace heat exchanger for use on an aircraft.

13. A method of manufacturing a heat exchanger system comprising:
installing a sensor within a heat exchanger, the sensor being for measuring characteristics of a fluid flow field across a cross-section of a flow path in the heat exchanger;
wherein the sensor comprises multiple conductivity sensing elements distributed across multiple locations in an array extending over the cross-section of the flow path for obtaining measurements of the fluid flow field at the multiple locations; and
the method optionally including forming the heat exchanger with features as claimed in any of claims 1 to 12.

14. A method as claimed in claim 13, wherein the method includes forming at least a portion of the heat exchanger by additive manufacturing and forming the sensing elements using the same additive manufacturing process.

15. A method of analysing characteristics of a fluid flow field across a cross-section of a flow path in a heat exchanger; the method comprising:
using a sensor comprising multiple conductivity sensing elements distributed across multiple locations in an array extending over the cross-section of the flow path for obtaining measurements of the fluid flow field at the multiple locations; and
the method optionally comprising using a heat exchanger with a sensor as claimed in any of claims 1 to 12.
